(19) Europäisches Patentamt
European Patent Office
Office européen des brevets

(11) **EP 1 749 320 B1**

(12) # FASCICULE DE BREVET EUROPEEN

(45) Date de publication et mention
de la délivrance du brevet:
**30.06.2010 Bulletin 2010/26**

(51) Int Cl.:
***H01M 10/0525*** *(2010.01)*

(21) Numéro de dépôt: **05766651.3**

(86) Numéro de dépôt international:
**PCT/FR2005/050375**

(22) Date de dépôt: **26.05.2005**

(87) Numéro de publication internationale:
**WO 2005/119816 (15.12.2005 Gazette 2005/50)**

(54) **ACCUMULATEUR AU LITHIUM AVEC UN SEPARATEUR POLYMERE**

LITHIUMBATTERIE MIT EINEM POLYMERSEPARATOR

LITHIUM BATTERY WITH A POLYMER SEPARATOR

(84) Etats contractants désignés:
**AT BE BG CH CY CZ DE DK EE ES FI FR GB GR HU IE IS IT LI LT LU MC NL PL PT RO SE SI SK TR**

(30) Priorité: **28.05.2004 FR 0451059**

(43) Date de publication de la demande:
**07.02.2007 Bulletin 2007/06**

(73) Titulaires:
- **Commissariat à l'Énergie Atomique et aux Énergies Alternatives**
  **75015 Paris (FR)**
- **Centre National de la Recherche Scientifique - CNRS**
  **75016 Paris Cedex 16 (FR)**

(72) Inventeurs:
- **Djian, Damien**
  **F-94120 Fontenay Sous Bois (FR)**
- **Martinet, Sébastien**
  **F-38000 Grenoble (FR)**
- **Lignier, Hélène**
  **F-38380 Saint Laurent Du Pont (FR)**
- **Sanchez, Jean-Yves**
  **F-38330 Saint Ismier (FR)**

(74) Mandataire: **Poulin, Gérard**
**Brevatome**
**3, rue du Docteur Lancereaux**
**75008 Paris (FR)**

(56) Documents cités:
**GB-A- 2 232 982      US-A1- 2001 024 755**
**US-A1- 2002 192 549      US-A1- 2003 099 884**
**US-B1- 6 517 972**

- **JARVIS C R ET AL: "The use of novel VDF-HFP-CTFE terpolymers in lithium-ion polymer cells" JOURNAL OF POWER SOURCES, ELSEVIER SEQUOIA S.A. LAUSANNE, CH, vol. 119-121, 1 juin 2003 (2003-06-01), pages 465-468, XP004430214 ISSN: 0378-7753**
- **DU PASQUIER A ET AL: "Plastic PVDF-HFP electrolyte laminates prepared by a phase-inversion process" SOLID STATE IONICS, NORTH HOLLAND PUB. COMPANY. AMSTERDAM, NL, vol. 135, no. 1-4, 1 novembre 2000 (2000-11-01), pages 249-257, XP004221555 ISSN: 0167-2738**

EP 1 749 320 B1

**Description**

**DOMAINE TECHNIQUE**

L'invention se rapporte au domaine des accumulateurs, en particulier de type lithium-ion sans électrode en graphite.

L'invention concerne notamment un accumulateur avec une membrane utilisée comme séparateur entre les électrodes. Cette membrane a des caractéristiques physiques particulières qui permettent son utilisation pour des batteries de puissance au lithium, c'est-à-dire dans des accumulateurs à charge et décharge rapides.

**ÉTAT DE LA TECHNIQUE ANTÉRIEURE**

Un accumulateur lithium-ion est constitué généralement de deux électrodes séparées par un électrolyte permettant la circulation des ions lithium d'une électrode à l'autre durant la charge ou la décharge de l'accumulateur. Les électrodes sont composées d'un matériau actif au niveau électrochimique et capable d'insérer dans sa structure le lithium. La technologie lithium-ion la plus répandue utilise du graphite à l'anode et un oxyde de cobalt lithié à la cathode.

En ce qui concerne les électrolytes, deux approches ont été développées : certains travaux (voir par exemple US-A-4 303 748) ont conduit à l'utilisation d'électrolytes secs, qui sont constitués d'un polymère sous forme de membrane dense dans lequel est incorporé un sel de lithium. Les polymères utilisés dans ce cas doivent présenter dans leur structure des fonctions chimiques capables de créer des interactions fortes avec le sel de lithium afin de le dissocier et permettre ainsi le transport des ions lithium entre les électrodes. Remplissant les critères de sécurité étant donné que chaque élément est solide et dans un état stable, les accumulateurs ainsi obtenus sont cependant peu performants, notamment à température ambiante : en effet, la conductivité ionique de ces systèmes est très faible jusqu'à environ 60°C. Aucun fonctionnement en puissance n'est envisageable actuellement à température ambiante avec ce type d'électrolyte sec: les accumulateurs de puissance doivent être capables de se charger en quelques minutes et de fournir de forts pics de courant lors de leur décharge.

L'architecture classique pour l'électrolyte concerne de fait un séparateur microporeux qui sert de support à un électrolyte liquide, lequel se loge dans la microporosité et prévient tout contact entre les deux électrodes qui entraînerait le cas échéant un court-circuit interne (Venugopal G. et coll.: « Characterization of microporous separators for lithium-ion batteries », Journal of Power Sources 1999 ; 77 : 34-41). Les électrolytes liquides sont par exemple constitués d'un mélange de solvants organiques de type carbonates cycliques et acycliques, dans lequel est dissout un sel de lithium, le plus couramment l'hexafluorophosphate de lithium ($LiPF_6$). Les séparateurs commerciaux actuels sont des membranes microporeuses en polyéthylène (PE) et/ou en polypropylène (PP) dont le taux de porosité varie de 30 à 50 %, d'épaisseur voisine de 25 $\mu$m et de taille de pores 100x40 $nm^2$. Le polyfluorure de vinylidène (PVdF), éventuellement copolymérisé avec l'hexafluorure de propylène (HFP), a également été utilisé.

D'autre part, les accumulateurs commerciaux actuels se chargent au minimum en une heure. Or, il est souhaitable pour certaines applications, dites de puissance, que les accumulateurs soient à charge et décharge rapides.

L'utilisation du graphite à l'électrode négative freine toute utilisation en puissance : en effet, lors du passage de forts courants en charge, des dendrites de lithium métallique se forment à la surface de l'anode, provoquant un court-circuit interne en cas de contact par les dendrites entre les deux électrodes. Ceci est dû au faible potentiel d'insertion (100 mV/Li$^+$/Li) de l'ion Li$^+$ dans le graphite. Pour pallier cet inconvénient ont été développées des membranes faiblement poreuses ou denses et plastifiées, présentées précédemment.

Parallèlement, il a été suggéré de remplacer le graphite par l'oxyde de titane lithié $Li_4Ti_5O_{12}$ : le potentiel d'insertion du Li$^+$ dans ce matériau (1,55 V/Li$^+$/Li) est nettement supérieur à celui du graphite, éliminant ainsi tout risque de formation de dendrite même sous de forts courants (Nakahara K. et coll.: « Preparation of particulate Li4Ti5O12 having excellent characteristics as an electrode active material for power storage cells », Journal cf Power Sources 2003 ; 117 : 131-136) Cependant, les membranes ne sont pas optimisées pour ces nouvelles électrodes. En particulier, l'absence d'interaction « liante » et de compatibilité entre cette électrode et le séparateur microporeux entraîne une mauvaise cohésion mécanique de l'ensemble.

**EXPOSÉ DE L'INVENTION**

L'invention a pour principal objet le développement d'un accumulateur lithium-ion qui n'utilise pas d'anode en graphite.

L'invention concerne un accumulateur comprenant une électrode positive, une électrode négative en un matériau présentant un potentiel d'insertion du lithium supérieur à 500 mV/Li$^+$/Li, une membrane de tortuosité inférieur à 2 comprenant un polymère fluoré, dont l'épaisseur est comprise entre 100 et 120 $\mu$m et présentant une porosité comprise entre 50 et 90 %, comme séparateur, et un électrolyte liquide ou sous forme de gel dans le séparateur.

Avantageusement, la membrane fluorée utilisée comme séparateur comprend des pores de taille comprise entre 1 et 10 $\mu$m, c'est-à-dire très importante par rapport aux usages actuels.

Avantageusement, la membrane est composée d'un polyfluorure de vinylidène, de préférence copolymérisé avec l'hexafluorure de propylène.

Les pores sont avantageusement sous forme de canaux longitudinaux transversaux.

La membrane est utilisée en combinaison avec un électrolyte liquide ou gélifié comprenant par exemple du $LiPF_6$, dans un accumulateur avec une électrode dont le potentiel d'insertion du Li est supérieur ou égal à 500 mV/Li$^+$/Li, par exemple en titanate de lithium, $Li_4Ti_5O_{12}$.

## BRÈVE DESCRIPTION DE LA FIGURE

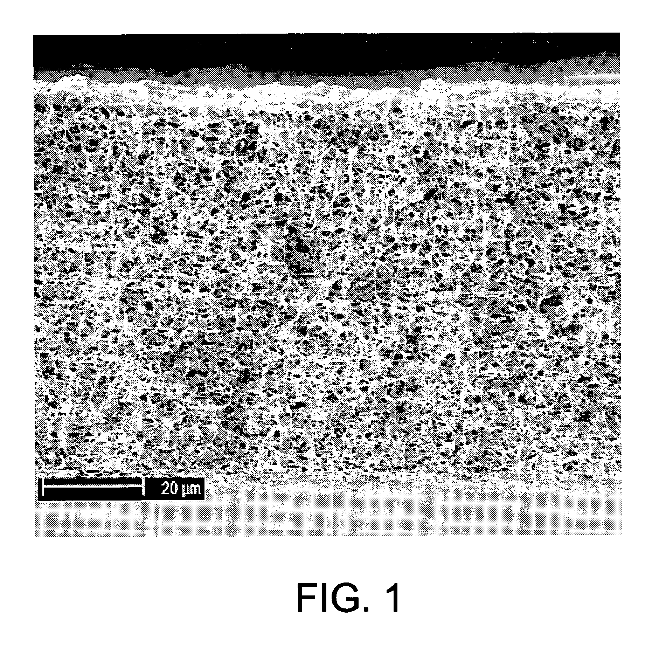

La figure 1 montre la structure d'une membrane selon un mode de réalisation de l'invention.

## EXPOSÉ DÉTAILLÉ DE MODES DE RÉALISATION PARTICULIERS

Au vu des résultats décrits dans l'état de la technique concernant les électrolytes « secs », une membrane est destinée à être utilisée comme séparateur servant de support à un électrolyte liquide, ou gélifié. Pour pallier l'un des problèmes mentionnés ci-dessus, il est souhaitable par ailleurs d'augmenter la cohésion mécanique entre les électrodes et la membrane. Cette cohésion est apportée par l'affinité de la membrane avec le liant, classiquement un polymère fluoré, employé pour réaliser les électrodes, ici notamment en $Li_4Ti_5O_{12}$. Un polymère fluoré, homopolymère ou de préférence copolymère, a ainsi été sélectionné pour réaliser une membrane poreuse selon l'invention.

Une telle membrane possède des caractéristiques « hybrides » entre les séparateurs microporeux et les membranes polymères sèches. L'électrolyte, de préférence à base de $LiPF_6$, se loge en partie dans la microporosité et en partie également dans la masse de la membrane car il est partiellement soluble. On a ainsi les trois phases en présence :

- une phase de polymère sec ;
- une phase gélifiée comprenant un polymère, un solvant organique et un sel ;
- une phase liquide dans les pores.

L'utilisation de cette membrane en tant que séparateur permet ainsi d'obtenir un système triphasé liquide/gel/solide par l'ajout de l'électrolyte liquide, système qui présente une bonne conductivité ionique, une bonne tenue mécanique, une excellente cohésion entre la membrane et les électrodes et un très faible risque de fuites.

La résistance électrique d'un tel système hybride s'exprime en fonction de la résistance de l'électrolyte liquide seul suivant l'équation : $R_{syst} = R_{liq} \times \dfrac{T}{\varepsilon}$, avec $R_{syst}$ résistance de la membrane hybride, $R_{liq}$ résistance de l'électrolyte liquide seul qui est utilisé pour la formation du gel, $\varepsilon$ porosité de la membrane et T tortuosité de la membrane (la tortuosité caractérise le chemin effectivement parcouru par un ion par rapport à la distance entre les deux électrodes).

Pour un bon fonctionnement en puissance, c'est-à-dire avec une charge et une décharge rapides, il est convenu que la résistance du système électrolytique soit la plus faible possible. Ainsi il est préféré que la porosité $\varepsilon$ tende vers 1, sachant que pour cette valeur de 100 %, l'électrolyte est purement liquide et ne peut donc plus assurer une séparation physique entre les deux électrodes. De même, la tortuosité T est si possible minimale, le plus proche de 1, quoique, ici aussi, la membrane reste poreuse et assure une séparation physique entre les électrodes.

Pour satisfaire ces conditions, la membrane polymère selon le mode de réalisation préféré de l'invention présente une forte porosité, de 50 à 90 %, de préférence supérieure à 60 %, tout en assurant une bonne tenue mécanique, et présente des pores en forme de canaux rectilignes transversaux, avec une tortuosité inférieure ou égale à 2.

Par ailleurs, la résistance de tout système électrolytique est liée à sa conductivité intrinsèque suivant l'équation :

$$R_{syst} = \frac{1}{\sigma_{syst}} \times \frac{e}{S},$$ avec $\sigma_{syst}$ conductivité du système électrolytique, e distance entre les deux électrodes et S surface de l'électrode de travail.

Pour diminuer la résistance, on augmente donc la surface des électrodes en respectant les contraintes liées à l'architecture de la batterie et, classiquement, on les rapproche pour diminuer e, c'est-à-dire qu'on diminue l'épaisseur de la membrane. De fait, les premières membranes réalisées pour l'invention étaient fines, typiquement entre 20 et 50 $\mu$m comme l'état de l'art l'indique.

Or il s'est avéré que les meilleures performances en puissance ont été obtenues avec des membranes épaisses, 60-70 à 120 $\mu$m.

Cet effet inattendu a été expliqué par les mécanismes de diffusion qui ont lieu au sein de l'électrolyte. Le flux des ions lithium entre les deux électrodes est dû à l'effet cumulé de la migration et de la diffusion (il n'y a pas de convection) : la migration est due au gradient de potentiel électrique et la diffusion au gradient de concentration. La densité de flux molaire en lithium $N_{Li}$ s'exprime alors suivant l'équation : $N_{Li} = N_{Li}^{m} + N_{Li}^{d}$.

Pour les forts courants lors d'une utilisation en puissance de la batterie, les ions Li$^+$ doivent être rapidement disponibles à la surface de l'électrode réductrice. Il s'avère que l'utilisation d'une membrane épaisse permet dans le cadre de l'invention de constituer un réservoir d'ions suffisamment conséquent pour assurer l'insertion du lithium dans l'électrode pour de forts pics de courant. La diffusion des ions est ainsi suffisamment élevée pour pouvoir ensuite assurer la recharge de ce réservoir pendant le fonctionnement de la batterie.

La solution proposée pour une membrane pour séparateur d'accumulateur avec notamment une anode en titanate de lithium repose ainsi sur l'emploi d'une membrane fluorée fortement microporeuse (50 à 90 %, de préférence autour de 60-70 %) et épaisse (de l'ordre de 100 μm). Cette membrane peut être obtenue, à partir d'un polymère fluoré de type polyfluorure de vinylidène (PVdF) incluant une large famille de copolymères dont le PVdF copolymérisé avec l'hexafluorure de propylène (PVdF/HFP), par les procédés classiques de mise en oeuvre des membranes.

Par ailleurs, la taille des pores de la membrane est avantageusement supérieure au micron. Cette augmentation induit une diminution de la tortuosité et ainsi favorise la migration et la diffusion des ions Li$^+$ dans l'électrolyte.

Exemple de réalisation

Une membrane a été réalisée par la technique d'inversion de phase qui repose sur quatre étampes :

(i) Le polymère, du PVdF/HFP, est solubilisé dans un de ses solvants afin d'obtenir une solution présentant une viscosité apparente d'environ 1800 cP, par exemple du N-méthylpyrolidone (NMP).
(ii) Cette solution est ensuite enduite sur un support rigide, plat et peu adhérent à l'aide d'une racle, c'est-à-dire un applicateur de film à hauteur de fente réglable, et dont l'épaisseur de la fente est contrôlée, idéalement à 500 μm.
(iii) Le support enduit est trempé pendant 5 à 10 minutes à température ambiante dans un bain d'une solution miscible avec le premier solvant, mais dans laquelle le polymère ne se dissout pas ; cette solution peut par exemple être tout type d'alcool, dont en particulier l'éthanol.
(iv) Une fois la coagulation du polymère réalisée, la plaque avec la membrane est placée dans une étuve pour séchage pendant 24 heures environ entre 50 et 60°C.

La membrane ainsi obtenue représente le mode de réalisation préféré de cette invention, avec une porosité comprise entre 50 et 90 %, une épaisseur est comprise entre 60 et 120 μm, une tortuosité inférieure à 2, et dont la taille des pores peut aller de 1 à 10 μm. Elle ne présente pas de peau en surface et la porosité est ouverte comme le montre la figure 1.

Exemple comparatif

La membrane ainsi réalisée a été comparée avec une membrane commerciale à base de polyoléfine de type Celgard®. Les deux membranes ont été testées dans un accumulateur avec une électrode négative constituée de titanate de lithium $Li_4Ti_5O_{12}$, qui présente une capacité spécifique de 160 mAh/g et un potentiel de 1,55 V/Li$^+$/Li, et une électrode positive constituée d'un oxyde de métal de transition lithié, ici de l'oxyde de manganèse $LiMn_2O_4$, de capacité 120 mAh/g et de potentiel de 4,1 V/Li$^+$/Li ; le titanate est en défaut par rapport à l'oxyde de manganèse. Le grammage de l'électrode négative est de 0,27 mAh/cm$^2$ et la capacité de l'accumulateur est de 0,4 mAh. L'électrolyte liquide utilisé en association avec les membranes est le LP30 fourni par Merck®, de composition EC/DMC 1/1, LiPF$_6$ 1M.

Les résultats sont présentés dans le tableau suivant :

**Tableau I : Caractéristiques et performances en accumulateur d'une membrane commerciale et d'une membrane selon l'invention**

|  | Celgard® 2400 | Membrane selon l'invention |
|---|---|---|
| Polymère | PP | PVdF/HFP |
| Epaisseur (μm) | 25 | 100 |
| Porosité (%) | 37 | 65 |
| Tortuosité | 2,4 | 1,9 |

(suite)

| | Celgard® 2400 | Membrane selon l'invention |
|---|---|---|
| Taille des pores ($\mu$m) | 0,1 | 5 |
| Capacité récupérée à 20C (% par rapport à C) | 65 | 85 |

Pour un régime de charge à 20C (charge complète de la batterie à courant constant en 3 minutes, soit 1/20 h), la perte de capacité est plus importante avec la membrane Celgard® qu'avec la membrane réalisée. Ainsi un accumulateur utilisant la membrane fluorée microporeuse comme séparateur peut-il être rechargé à 85 % et plus de sa capacité initiale en 3 minutes contre 65 % au maximum pour une membrane commerciale : les performances en puissance obtenues sont meilleures qu'avec les membranes microporeuses commerciales.

**Revendications**

1.  Accumulateur comprenant une électrode positive, une électrode négative en un matériau présentant un potentiel d'insertion du lithium supérieur à 500 mV/Li$^+$/Li, une membrane de tortuosité inférieure à 2 comprenant un polymère fluoré, dont l'épaisseur est comprise entre 100 et 120 $\mu$m et présentant une porosité comprise entre 50 et 90 %, comme séparateur, et un électrolyte liquide ou sous forme de gel dans le séparateur.

2.  Accumulateur selon la revendication 1 dans lequel les pores de la membrane ont une dimension comprise entre 1 et 10 $\mu$m.

3.  Accumulateur selon l'une des revendications 1 à 2 dans lequel le polymère de la membrane est du type polyfluorure de vinylidène.

4.  Accumulateur selon l'une des revendications 1 à 3 dans lequel le polymère est un copolymère.

5.  Accumulateur selon la revendication 4 en combinaison avec la revendication 3, dans lequel le polyfluorure de vinylidène est copolymérisé avec l'hexafluorure de propylène.

6.  Accumulateur selon l'une des revendications 1 à 5 dans lequel la porosité de la membrane est ouverte.

7.  Accumulateur selon l'une des revendications 1 à 6 dans laquelle les pores de la membrane sont sous forme de canaux longitudinaux transversaux.

8.  Accumulateur selon l'une des revendications 1 à 7 dans lequel l'électrode négative est en titane de lithium, tel que $LI_4Ti_5O_{12}$.

**Claims**

1.  Battery comprising a positive electrode, a negative electrode in a material having a lithium insertion potential greater than 500 mV/Li$^+$/hi, and a membrane of a tortuosity of less than 2, comprising a fluorinated polymer, the thickness of which is between 100 and 120 $\mu$m and the porosity of which is between 50 and 90%, as separator, and a liquid electrolyte or an electrolyte in gel form in the separator.

2.  Battery according to claim 1 wherein the pores of the membrane have a size between 1 and 10 $\mu$m.

3.  Battery according to one of claims 1 to 2 wherein the Polymer of the membrane is of the polyvinylidene fluoride type.

4.  Battery according to one of claims 1 to 3 wherein the polymer is a copolymer.

5.  Battery according to claim 4 wherein polyvinylidene fluoride is copolymerized with propylene hexafluoride.

6.  Battery according to one of claims 1 to 5 wherein the porosity of the membrane is open.

7. Battery according to one of claims 1 to 6 wherein the pores of the membrane are in the form of transversal longitudinal channels.

8. Battery according to one of claims 1 to 7 wherein the negative electrode is in lithium titanate, such as $Li_4Ti_5O_{12}$.

**Patentansprüche**

1. Akkumulator umfassend eine positive Elektrode,eine negative Elektrode aus einem Material, welches ein Lithium-Insertions-bzw. -Einbaupotential von über 500 mV / $Li^+$ / Li aufweist, eine Membran einer Tortuosität bzw. eines Verwindungsgrades von kleiner als 2, weiche ein fluorisiertes Polymer aufweist sowie eine Dicke im Bereich zwischen 100 und 120 mm und eine Porosität im Bereich zwischen 50 und 90 % besitzt, als Separator,sowie einen flüssigen oder gelförmigen Elektrolyten in dem Separator.

2. Akkumulator nach Anspruch 1, in welchem die Poren der Membran eine Abmessung im Bereich zwischen 1 und 10 mm besitzen.

3. Akkumulator nach einem der Ansprüche 1 bis 2, bei weichem das Polymer der Membran vom Typ Polyvinylidenfluorid ist.

4. Akkumulator nach einem der Ansprüche 1 bis 3, bei welchem das Polymer ein Kopolymer ist.

5. Akkumulator nach Anspruch 4 in Kombination mit Anspruch 3, bei welchem das Polyvinylidenfluorid ein Kopolymerisat mit Propylenhexafluorid ist.

6. Akkumulator nach einem der Ansprüche 1 bis 5, bei welchem die Porosität der Membran offenen Charakter besitzt.

7. Akkumulator nach einem der Ansprüche 1 bis 6, bei welchem die Poren der Membran in Form querverlaufender längliches Kanäle vorliegen.

8. Akkumulator nach einem der Ansprüche 1 bis 7, bei welchem die negative Elektrode aus einem Lithiumtitanat wie beispielsweise $Li_4Ti_5O_{12}$ besteht.

## FIG. 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4303748 A


**Littérature non-brevet citée dans la description**

- **Venugopal G.** Characterization of microporous separators for lithium-ion batteries. *Journal of Power Sources,* 1999, vol. 77, 34-41

- **Nakahara K.** Preparation of particulate Li4Ti5O12 having excellent characteristics as an electrode active material for power storage cells. *Journal cf Power Sources,* 2003, vol. 117, 131-136